# DEMANDE DE BREVET EUROPEEN

(11) **EP 3 813 494 A1**
(43) Date de publication de la demande: **28.04.2021**
(21) Numéro de dépôt: 20203590.3
(22) Date de dépôt: 23.10.2020
(51) Int. Cl.: H05B 47/17, H05B 47/19

(54) **PROCÉDÉ ET SYSTÈME DE CONTRÔLE DYNAMIQUE DU FONCTIONNEMENT D'UN ÉQUIPEMENT**

(30) Priorité: 23.10.2019 FR 1911873
(71) Demandeur: FS Tunnel, 94550 Chevilly-Larue (FR)
(72) Inventeur: MERKEZ, Erik, 94550 Chevilly-Larue (FR)
(74) Mandataire: Nony

(57) **Abrégé**

Procédé de gestion dynamique du fonctionnement, dans un espace, d'au moins un équipement (6 ; 6a, 6b, 6c) agencé pour fonctionner sélectivement au moins selon un premier mode de fonctionnement et un deuxième mode de fonctionnement, l'espace étant équipé d'au moins un système de détection (18) de badge RFID actif (10), chaque système de détection (18) de badge RFID actif (10) comportant une antenne de détection (8 ; 8a, 8b, 8c) et étant configuré pour identifier le badge (10) et délivrer une information relative à la distance (d) séparant le badge (10) de l'antenne de détection (8), procédé dans lequel on commande le passage du premier mode de fonctionnement au deuxième mode de fonctionnement de l'équipement (6 ; 6a, 6b, 6c), en fonction de l'identifiant de badge (10) et
- de la distance entre l'antenne de détection (8 ; 8a, 8b, 8c) et le badge (10), chaque équipement étant associé à au moins un système de détection et on commande le passage du premier mode de fonctionnement au deuxième mode de fonctionnement de l'équipement (6, 6a, 6b, 6c) lorsque la distance entre le badge (10) et l'antenne (8 ; 8a, 8b, 8c) du système de détection associé à l'équipement (6, 6a, 6b, 6c) devient inférieure à une distance de déclenchement prédéfinie, ou
de la position 2D du badge (10) dans l'espace, au moins deux systèmes de détection étant présents, la position 2D du badge étant calculée par triangulation connaissant la distance du badge aux antennes (8a, 8b, 8c) de ces systèmes de détection, et on commande le passage du premier mode de fonctionnement au deuxième mode de fonctionnement de l'équipement (6a, 6b, 6c) lorsque le badge se situe dans une zone 2D (I, II, III, IV) prédéfinie de l'espace.

## Description

La présente invention concerne la gestion dynamique du fonctionnement d'un équipement, notamment d'un système d'éclairage, dans un espace, notamment le long d'un ouvrage tel qu'un tunnel.

Dans les projets d'ouvrages, l'éclairage est souvent utilisé en mode maximal de façon permanente. Cela engendre une consommation d'énergie importante, notamment lorsque les distances à éclairer sont importantes comme cela peut s'avérer être le cas dans un tunnel. Cela tend aussi à réduire la durée de vie des dispositifs d'éclairage utilisés.

La portée des détecteurs automatiques ayant une distance de détection de quelques dizaines de centimètres dans le cas d'une carte RFID passive voire de quelques mètres dans le cas d'un détecteur mouvement par IR par exemple ou d'une caméra rend ceux-ci peu adaptés à une utilisation sur des ouvrages s'étendant sur une distance importante. De plus de tels détecteurs ne sont pas pratiques à installer, par exemple dans le cas d'un tunnel où l'espacement entre deux sources d'éclairage peut atteindre 200m ou plus, par exemple 400m ou plus.

La demande CN 208353666 divulgue un système d'illumination d'un tunnel qui diminue l'intensité de l'éclairage lorsqu'aucun véhicule n'est détecté pendant une durée prédéterminée. La détection est effectuée via des caméras, ce qui rend le système complexe et sujet à de fausses détections. De plus, les caméras sont adaptées uniquement à une détection sur des distances courtes. Elles sont aussi non adaptées en cas de virage ou de perte de visibilité pour d'autres raisons.

La demande US 2007229250 divulgue des modules d'éclairage sans fil à LEDs commandés par les données reçues par un lecteur RFID du type de ceux couramment utilisés pour détecter la présence d'une personne dès son entrée dans le champ de détection, avec une portée de détection typiquement de 10 à 15 cm.

CN 108966466 divulgue un système de commande de lampadaire configuré pour allumer ou éteindre le lampadaire en fonction de la distance entre des voitures ou des passagers et celui-ci.

US 2007/244572 divulgue un système de commande automatique pour changer l'intensité d'éclairage dans une chambre ou dans un couloir, comportant un capteur de proximité configuré pour détecter la présence à proximité d'un transmetteur de proximité.

US 2016/150624 divulgue un système d'éclairage comportant un dispositif de commande configuré pour ajuster les propriétés d'éclairage lorsque le dispositif de commande est amené à proximité du système d'éclairage au sein d'une période prédéfinie.

Il existe un besoin pour diminuer la consommation électrique liée à l'éclairage d'ouvrages d'une façon fiable et facile à implanter.

L'invention vise à répondre à ce besoin et a ainsi pour objet un procédé de gestion dynamique de l'éclairage dans un espace, notamment le long d'un ouvrage tel qu'un tunnel, équipé d'au moins un module d'éclairage agencé pour être sélectivement alimenté au moins selon un premier mode d'éclairage et un deuxième mode d'éclairage et d'au moins un système de détection de badge RFID actif associé audit module, chaque système de détection de badge RFID actif comportant une antenne de détection RFID actif et étant configuré pour identifier le badge et délivrer une information relative à la distance séparant le badge de l'antenne de détection, procédé dans lequel l'intensité lumineuse émise par ledit module est de préférence non nulle dans chacun de ces modes d'éclairage et supérieure dans le deuxième mode d'éclairage, et dans lequel on commande le passage du premier mode d'éclairage au deuxième mode d'éclairage du module au moins lorsque la distance entre le badge et l'antenne du système de détection associé à ce module devient inférieure à une distance de déclenchement prédéfinie.

Par badge RFID actif, il faut comprendre un badge permettant une détection sur de longue distance, typiquement supérieure ou égale à 50m, par exemple comprise entre 50m et 200m.

En réduisant l'intensité de l'éclairage en l'absence de personnes, l'invention permet des économies d'énergie substantielles, par exemple jusqu'à plus de 8W/m dans le cas d'un tunnel. L'invention permet également de prolonger la durée de vie de l'éclairage. En même temps, le retour à un éclairage normal en réponse à la détection lointaine de l'arrivée d'une personne répond à l'exigence de sécurité.

Le deuxième mode d'éclairage est par exemple un éclairage nul ou un éclairage de secours. Un éclairage réduit non nul est préférable pour des questions de sécurité.

Dans une variante, le module d'éclairage peut être éteint dans le deuxième mode d'éclairage. Dans ce cas, un autre système indépendant peut être utilisé en tant qu'éclairage de secours, si nécessaire.

Le système de détection peut être configuré pour détecter le badge lorsque la distance séparant le badge de l'antenne de détection devient inférieure à un rayon de détection, i.e., le badge entre dans une zone de couverture de l'antenne. Le rayon de détection peut dépendre de la technologie utilisée ou de la puissance d'émission qui peut être réglable. Ce rayon est par exemple d'au moins 100m, par exemple autour de 150m pour la technologie RFID active UWB.

A partir du moment où l'antenne détecte la présence d'un badge, le système peut calculer régulièrement la distance la séparant du badge. Le passage du premier mode d'éclairage au deuxième mode d'éclairage du module est commandé lorsque la distance calculée devient inférieure à la distance de déclenchement prédéfinie. Autrement dit, la simple détection du badge par l'antenne ne suffit pas pour commander le passage du premier mode d'éclairage au deuxième mode d'éclairage et il faut que la distance les séparant, calculée, devienne inférieure à la distance de déclenchement prédéfinie.

La distance de déclenchement prédéfinie est de préférence strictement inférieure au rayon de détection de l'antenne utilisée.

La distance entre l'antenne et le badge détecté par l'antenne peut être suivie en continu, ou périodiquement, par exemple toutes les 5 ou 10 secondes.

L'intensité d'éclairage du module peut varier en fonction de la distance calculée. Par exemple, le module peut prendre une première intensité d'éclairage lorsque la distance calculée est inférieure à une première distance prédéfinie et une deuxième intensité d'éclairage plus grande que la première lorsque la distance calculée est inférieure à une deuxième distance prédéfinie, plus petite que la première.

De préférence, le système de détection est agencé pour délivrer l'information relative à la distance entre l'antenne et le badge, par exemple via la mesure du temps de vol du signal entre l'antenne et le badge tel que dans le cas de la technologie RFID active UWB. D'autres solutions RFID actives utilisant le Bluetooth ou le Wifi qui mesurent la puissance du signal reçu par l'antenne et en déduisent la distance peuvent aussi être utilisées.

Le système de détection peut comporter une sortie locale, notamment un contact sec, et la commande du mode d'éclairage du module peut s'effectuer à partir de ce contact sec.

Le procédé peut être mis en oeuvre avec une pluralité de systèmes de détection associés chacun à au moins un module d'éclairage respectif.

Les systèmes de détection sont de préférence répartis le long de l'ouvrage, de même que les modules d'éclairage respectifs, l'ouvrage étant par exemple un tunnel.

La distance prédéfinie de déclenchement peut être de quelques mètres au moins, étant de préférence supérieure à 50m, étant notamment comprise entre 50 et 200m. Une distance supérieure à 50m ne peut pas être gérée par les systèmes de détection RDIF passifs. Le retour de l'alimentation sous tension réduite d'un module peut être commandé de manière automatique lorsqu'aucun badge n'est détecté par l'antenne associé pendant une durée prédéterminée, par exemple 5 ou 15 minutes.

Dans une variante, le procédé peut fonctionner par « zones » grâce à la détection précise de la position du badge. Dans ce cas, plutôt que de définir uniquement une distance, c'est-à-dire d'opérer en « 1D », le procédé peut utiliser un algorithme de localisation, avec plusieurs balises permettant de localiser le badge RFID actif de manière précise en « 2D », notamment par une méthode de triangulation.

L'invention a ainsi encore pour objet un procédé de gestion dynamique de l'éclairage dans un espace, notamment le long d'un ouvrage tel qu'un tunnel, équipé d'au moins un module d'éclairage agencé pour être sélectivement alimenté au moins selon un premier mode d'éclairage et un deuxième mode d'éclairage et d'au moins deux systèmes de détection de badge RFID actif, chaque système de détection de badge RFID actif comportant une antenne de détection RFID actif et étant configuré pour identifier le badge et délivrer une information relative à la distance séparant le badge de l'antenne de détection, procédé dans lequel on commande, en fonction de l'identifiant du badge et de la position 2D du badge dans l'espace, le passage d'un premier mode d'éclairage à un deuxième mode d'éclairage du module au moins lorsque le badge se trouve dans une zone en 2D prédéfinie de l'espace, la position 2D du badge étant calculée par triangulation connaissant la distance du badge aux antennes de ces systèmes de détection.

Avec l'algorithme de localisation, il est possible de positionner et donc d'activer un module d'éclairage ou modifier son intensité d'éclairage selon la présence dans une zone du badge et non uniquement par rapport à la proximité ou bien la distance mesurée entre le badge et une seule antenne.

Par exemple, le procédé comprend la mise en service d'un premier module d'éclairage lorsque le badge est détecté dans une première zone prédéfinie en 2D, d'un deuxième module éclairage lorsque le badge est détecté dans une deuxième zone, et/ou certains éclairages en commun lorsque le badge est détecté dans une troisième zone.

L'intensité lumineuse émise par ledit module est par exemple non nulle dans chacun de ces modes d'éclairage et de préférence supérieure dans le deuxième mode d'éclairage.

L'invention a encore pour objet un système de commande d'au moins un module d'éclairage d'un ouvrage agencé pour être sélectivement alimenté au moins selon un premier mode d'éclairage et un deuxième mode d'éclairage, notamment pour la mise en œuvre du procédé selon l'invention telle que définie ci-dessus, comportant :
- un système de détection de badge RFID actif comportant une antenne de détection et configuré pour identifier le badge et délivrer une information relative à la distance séparant le badge de l'antenne de détection,
- un système d'alimentation du module, agencé pour alimenter ce dernier sélectivement selon au moins le premier mode d'éclairage et le deuxième mode d'éclairage, l'intensité lumineuse émise par le module étant de préférence non nulle dans chacun de ces modes d'éclairage et supérieure dans le deuxième mode d'éclairage, le système d'alimentation étant agencé pour commander le passage du premier mode d'éclairage au deuxième mode d'éclairage au moins lorsque la distance entre l'antenne et le badge tel qu'identifié par le système de détection devient inférieure à une distance de déclenchement prédéfinie.

Le système d'alimentation du module peut être configuré pour commander le passage du premier mode d'éclairage au deuxième mode d'éclairage seulement pour des types de badges prédéterminés, en fonction par exemple de l'identifiant du badge. L'identifiant du badge peut donc correspondre aux différentes catégories de porteurs de badge, par exemple sélectionnées entre autres parmi les personnels, les engins, les voitures, les inventaires et les automates. Par exemple, les badges des personnels et véhicules déclenchent le passage du premier mode d'éclairage au deuxième mode d'éclairage. En revanche, les badges présents sur des équipements autonomes ou les inventaires, sans personne, par exemple équipant des drones, ne déclenchent pas le passage du premier mode d'éclairage au deuxième mode d'éclairage.

Dans une variante, l'identifiant du badge peut correspondre à un numéro de badge. Le système de détection, par exemple l'antenne de détection, peut comporter une mémoire, cette dernière comportant ou pouvant télécharger une liste correspondant aux numéros de badges RFID. Certains numéros de badges peuvent déclencher le mode d'éclairage, et d'autres déclencher le deuxième mode d'éclairage, et par défaut, les badges dont les numéros ne sont pas dans la liste n'ont aucun effet sur le système d'alimentation. Cette liste peut être mise à jour régulièrement.

L'identifiant du badge peut encore permettre le passage du premier mode d'éclairage au second suivant des distances de déclenchement prédéfinies différentes, fonction de l'identifiant. Par exemple, les badges équipant des engins ou voitures déclenchent le passage à une distance de déclenchement prédéfinie de 120m à 200m, car étant donnée la vitesse de déplacement, il faut détecter plus en amont. Les badges des personnes peuvent déclencher le passage d'un mode d'éclairage à l'autre à une distance de déclenchement prédéfinie inférieur, par exemple de 50m à 120m.

De préférence, le système de commande est fixe par rapport au module d'éclairage. Par exemple, le système de commande et le module d'éclairage sont installés dans un même boîtier.

L'invention a encore pour objet un système d'éclairage comportant :
- au moins un module d'éclairage agencé pour être sélectivement alimenté au moins selon un premier mode d'éclairage et un deuxième mode d'éclairage, et
- au moins un système de commande selon l'invention.

Le système peut comporter au moins deux modules d'éclairage associés à un système de commande commun.

Le ou les modules d'éclairage peuvent comporter au moins un module LED, par exemple au moins deux modules LED, notamment disposés au sein d'un même ruban ou projecteur. Les modules LED peuvent être disposés sur un même circuit imprimé.

L'invention a encore pour objet un ouvrage équipé d'un système d'éclairage tel que défini plus haut. L'ouvrage peut comporter plusieurs modules d'éclairage associés chacun à un système de détection et un système d'alimentation.

Les systèmes de détection peuvent être éloignés entre eux d'une distance d'au moins de quelques mètres, de préférence comprise entre 50 et 250m, notamment étant disposés tous les 100m ou 200m.

Le procédé selon l'invention peut encore être utilisé pour la gestion dynamique dans un espace du fonctionnement d'équipements autres que l'éclairage, par exemple la ventilation, notamment en tunnel, ou encore le chauffage ou l'air conditionné, notamment pour des entrepôts, voire s'appliquer à un système d'alarme ou de surveillance, par exemple à désactiver si le badge est détecté dans une zone précise.

L'invention a ainsi encore pour objet un procédé de gestion dynamique du fonctionnement, dans un espace, d'au moins un équipement agencé pour fonctionner sélectivement au moins selon un premier mode de fonctionnement et un deuxième mode de fonctionnement, l'espace étant équipé d'au moins un système de détection de badge RFID actif, chaque système de détection de badge RFID actif comportant une antenne de détection et étant configuré pour identifier le badge et délivrer une information relative à la distance séparant le badge de l'antenne de détection, procédé dans lequel on commande le passage du premier mode de fonctionnement au deuxième mode de fonctionnement de l'équipement, en fonction de l'identifiant de badge et
- de la distance entre l'antenne de détection et le badge, chaque équipement étant associé à au moins un système de détection et on commande le passage du premier mode de fonctionnement au deuxième mode de fonctionnement de l'équipement lorsque la distance entre le badge et l'antenne du système de détection associé à l'équipement devient inférieure à une distance de déclenchement prédéfinie, ou
- de la position 2D du badge dans l'espace, au moins deux systèmes de détection étant présents, la position 2D du badge étant calculée par triangulation connaissant la distance du badge aux antennes de ces systèmes de détection, et on commande le passage du premier mode de fonctionnement au deuxième mode de fonctionnement de l'équipement lorsque le badge se situe dans une zone 2D prédéfinie de l'espace.

L'espace peut comporter, par exemple être réparti, en plusieurs zones prédéfinies. Les zones prédéfinies ne sont de préférence pas en chevauchement.

Dans le cas où la commande s'effectue en fonction de la position, les équipements peuvent être associés à un système de commande commun qui calcule la position 2D du badge dans l'espace à partir des distances entre le badge et au moins deux antennes de détection, afin de déterminer le positionnement du badge relativement à la ou aux zones prédéfinies, et le système de commande pilote le passage ou non de chaque équipement du premier au deuxième mode de fonctionnement.

L'identifiant du badge peut correspondre à un numéro de badge. Certains numéros de badges peuvent déclencher le premier mode de fonctionnement, et d'autres déclencher le deuxième mode de fonctionnement, et par défaut, les badges dont les numéros ne sont pas dans la liste n'ont aucun effet sur le fonctionnement des équipements. Une liste de numéros de badges peut être téléchargée ou stockée, par exemple dans une mémoire du système de détection. Cette liste peut être mise à jour régulièrement.

Le système de détection peut être agencé pour délivrer l'information relative à la distance entre l'antenne et le badge via la mesure du temps de vol, entre l'antenne et le badge, d'un signal envoyé par le badge.

Le système de détection peut comporter une sortie locale, notamment un contact sec, et la commande du mode de fonctionnement de l'équipement peut s'effectuer à partir de ce contact sec.

L'espace en question peut être ouvert ou fermé. L'espace est par exemple défini par un ouvrage, notamment un tunnel ou un entrepôt. Ce dernier peut être fermé ou au moins partiellement ouvert, ayant par exemple au moins une partie à l'air libre. L'espace peut être équipé d'une pluralité de systèmes de détection associés chacun à au moins un équipement respectif.

Les systèmes de détection peuvent être répartis le long de l'ouvrage, de même que les équipements respectifs, par exemple lorsque l'espace est un ouvrage.

L'équipement peut être un module d'éclairage ou un système de ventilation.

En variante, l'équipement peut être un système de chauffage ou de climatisation.

En variante, l'équipement est un système d'alarme ou de surveillance. Le passage du premier au deuxième mode de fonctionnement peut correspondre à l'activation ou à l'inactivation de l'alarme, et/ou d'un signal sonore du système d'alarme. Par exemple, si le badge RFID est détecté dans une zone 2D prédéfinie de l'espace ou à une distance inférieure à la distance de déclenchement prédéfinie d'un système de détection associé au système d'alarme, alors l'alerte automatique d'intrusion n'est pas activée.

La distance prédéfinie de déclenchement est de préférence supérieure à 50m, notamment étant comprise entre 50 et 200m, le badge actif étant de préférence de technologie UWB.

En complément de l'algorithme de positionnement, le procédé peut comporter une étape de filtrage, notamment lorsque l'espace est un espace fermé.

Dans ce cas, le système peut être configuré pour filtrer et/ou vérifier l'information relative à la distance. Le filtrage comporte par exemple l'élimination de données erronées/absurdes, la vérification que le badge actif est bien dans la zone, notamment en ayant de multiples lectures valides sur une courte période, par exemple de moins de 30s, par exemple de 20 secondes. Cela permet par exemple d'éliminer les effets des ondes se réfléchissant sur les parois ou murs d'un espace fermé tel qu'un tunnel ou bâtiment, lesquelles peuvent brouiller les données de distance. La vérification peut être réalisée, en particulier pour une localisation en 2D, à l'aide d'un algorithme de localisation (par exemple par triangulation) avec la lecture de la distance par plusieurs balises RFID et/ou avoir plusieurs lectures de distance valides sur une courte période définie (par exemple moins de 30s, par exemple 10 secondes) avant de commander le passage d'un mode de fonctionnement à l'autre. Cela permet par exemple de s'assurer que le badge RFID actif est bien localisé dans la bonne zone et élimine les lectures erronées.

Le procédé peut encore comporter une étape de pré-information de l'équipement pendant laquelle l'équipement est préparé pour le passage du premier mode au deuxième mode de fonctionnement, par exemple notamment lorsqu'un préchauffage est nécessaire pour un système sortant d'un mode veille.

L'invention a encore pour objet un système de commande d'au moins d'un équipement dans un espace agencé pour fonctionner sélectivement au moins selon un premier mode de fonctionnement et un deuxième mode de fonctionnement, notamment pour la mise en œuvre du procédé selon l'invention telle que définie ci-dessus, comportant :
- au moins un système de détection de badge RFID actif comportant une antenne de détection et configuré pour identifier le badge et délivrer une information relative à la distance séparant le badge de l'antenne de détection,
- un système d'alimentation de l'équipement, agencé pour alimenter ce dernier sélectivement pour le permettre de fonctionner selon au moins le premier mode d'éclairage et le deuxième mode d'éclairage, le système d'alimentation étant agencé pour commander le passage de l'équipement du premier mode de fonctionnement au deuxième mode de fonctionnement en fonction de l'identifiant de badge et
   ∘ de la distance entre l'antenne de détection et le badge, chaque équipement étant associé à au moins un système de détection et on commande le passage du premier mode de fonctionnement au deuxième mode de fonctionnement de l'équipement lorsque la distance entre le badge et l'antenne du système de détection associé à l'équipement devient inférieure à une distance de déclenchement prédéfinie, ou
   ∘ de la position 2D du badge dans l'espace, au moins deux systèmes de détection étant présents, la position 2D du badge étant calculée par triangulation connaissant la distance du badge aux antennes de ces systèmes de détection, et on commande le passage du premier mode de fonctionnement au deuxième mode de fonctionnement de l'équipement lorsque le badge se situe dans une zone 2D prédéfinie de l'espace.

L'invention a encore pour objet un système d'éclairage, de chauffage, de climatisation, de ventilation, d'alarme ou de surveillance comportant :
- au moins un système de commande selon l'invention, et
- au moins un module d'éclairage, de chauffage, de climatisation, de ventilation, d'alarme ou de surveillance agencé pour être sélectivement alimenté au moins selon un premier mode d'éclairage et un deuxième mode d'éclairage.

D'autres caractéristiques et avantages de la présente invention ressortiront à la lecture de la description détaillée qui va suivre, d'un exemple de réalisation non limitatif de celle-ci, et à l'examen du dessin annexé, sur lequel:
[Fig 1] la figure 1 représente un système de d'éclairage selon l'invention, et
[Fig.2] la figure 2 représente un système de commande selon l'invention,
[Fig.3] et [Fig.4] illustrent respectivement la mesure de la distance et de la position d'un badge par les antennes.

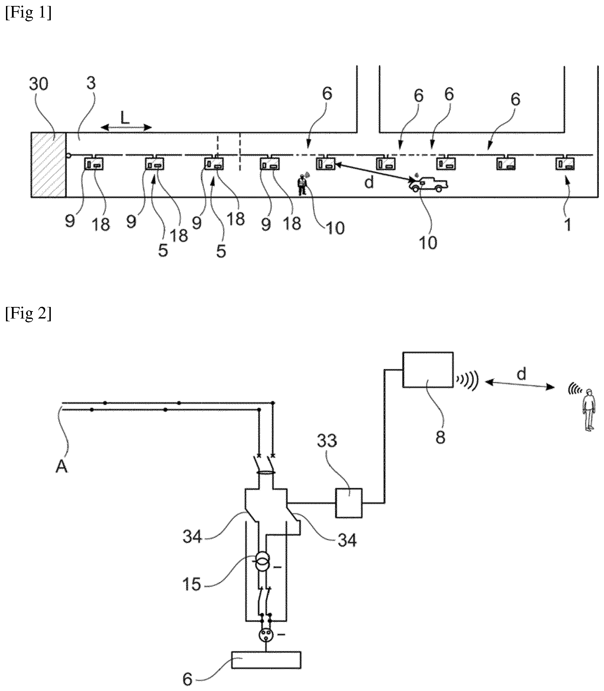

On a illustré à la figure 1 un système de commande d'éclairage selon l'invention, équipant un tunnel 3. Dans l'exemple illustré, le tunnel est représenté avec un tunnelier 30 à une extrémité. Bien entendu, l'invention n'est pas limitée à un tunnel en construction.

Dans cet exemple, une succession de modules de d'éclairage 6, par exemple sous forme de rubans lumineux, est installée de façon régulière le long du tunnel.

Les modules d'éclairage 6 sont agencés pour être sélectivement alimentés au moins selon un premier mode d'éclairage et un deuxième mode d'éclairage. Par exemple, pour certains tunnels en construction, au niveau des cheminements piétons, le premier mode d'éclairage correspond à l'éclairage de secours, de l'ordre de 10 Lux et le deuxième mode d'éclairage correspond à l'éclairage normal, de l'ordre de 40 Lux.

Le système de commande d'éclairage comporte, pour chaque module d'éclairage 6, un système d'alimentation 9 et un système de détection 18 comportant une antenne de détection 8.

Le système de détection 18 est configuré pour identifier un badge RFID actif 10 entrant dans son champ de détection, et délivrer une information relative à la distance séparant le badge 10 de l'antenne de détection 8. Le badge 10 peut être porté par un individu, par exemple un personnel du tunnel ou être disposé sur un véhicule.

Dans l'exemple illustré, chaque système d'alimentation 9 et de détection 18 est associé à un module d'éclairage 6. Chaque système d'alimentation 9 et de détection 18 est logé dans une armoire 5 de contrôle, placée par exemple au milieu de modules 6 commandés par ces systèmes. Une même armoire 5 peut ainsi loger deux systèmes de détection 18 et d'alimentation 9 qui pilotent deux modules d'éclairages 6 disposés de part et d'autre de cette armoire 5.

La distance d de déclenchement prédéfinie entre l'antenne 8 et le badge 10 qui déclenche le passage du ou des modules 6 associés du premier mode d'éclairage au deuxième mode d'éclairage est par exemple de l'ordre de 100m.

Chaque système de détection 18 comporte par exemple un circuit électronique qui effectue la détection et l'identification et calcule la distance avec le badge, par exemple en se fondant sur le temps de vol (ToF) d'un signal émis par le badge tel que dans le cas de la technologie RFID UWB. D'autres technologies utilisant le Wifi ou le Bluetooth, dans lesquelles on détermine la distance à partir de la puissance du signal, peuvent également être utilisées. D'autres technologies de géo-positionnement indoor à base de radiofréquences, capables de fournir la distance entre le badge et l'antenne fixe pourraient encore être utilisées.

Le circuit électronique peut être agencé pour transmettre à un poste de contrôle une information comportant l'identifiant du badge et la distance de celui-ci à l'antenne de détection, afin par exemple de permettre l'affichage sur un écran des identifiants et de leur position, à des fins de sécurité. En parallèle, le circuit électronique comporte par exemple un relais fournissant un contact sec, et le circuit est programmé pour modifier l'état de ce contact en fonction de la distance à laquelle se trouve un badge 10 détecté par le système. Ce contact sec peut être utilisé pour commander un commutateur du circuit d'alimentation, tel qu'un relais ou un relais temporisé, qui change par exemple la tension d'alimentation des modules d'éclairage. Par exemple, le circuit d'alimentation est agencé pour alimenter les modules sous une tension réduite, par exemple d'au moins 20%, voire plus, de leur tension nominale, quand le contact sec est dans un premier état, par exemple ouvert, et sous leur tension nominale, par exemple 220V AC, lorsque le contact sec est dans un deuxième état, par exemple fermé.

Un exemple d'un système de commande est illustré à la figure 2. Ce système comporte un circuit électronique 33 qui présente une sortie avec un contact sec configuré pour commander un relais 34 du circuit d'alimentation dans l'exemple illustré. Ce relais permet le passage du module d'éclairage 6 du premier au deuxième mode d'éclairage.

Dans l'exemple illustré, le relais 34 est dans un premier état permettant l'alimentation du module d'éclairage 6 à travers un transformateur abaisseur 15 sous une tension réduite, par exemple 160V AC dans l'exemple illustré.

Lorsque le relais 34 passe dans le deuxième état, le module d'éclairage 6 est alimenté sous la tension nominale, par exemple de 220 V AC dans l'exemple illustré, par le réseau A.

Ce passage peut être commandé automatiquement en fonction de la distance entre l'antenne 10 et le badge détecté par celle-ci, en fonction du paramétrage du circuit électronique 33.

Le retour de l'alimentation sous tension réduite peut avoir lieu lorsqu'aucun badge n'est détecté par l'antenne 10 pendant une durée prédéterminée.

Lorsque le relais 34 est temporisé, le retour du deuxième état au premier état s'effectue une fois que ladite durée prévue par la temporisation du relais s'est écoulée, par exemple 5 ou 15 minutes. Dans une variante, le circuit électronique 33 assure lui-même cette fonction de temporisation.

Le changement d'état du contact sec peut être paramétrable, en fonction par exemple de la distance de détection et de la durée de présence dans un périmètre de détection prédéfini du badge, voire de l'identifiant du badge.

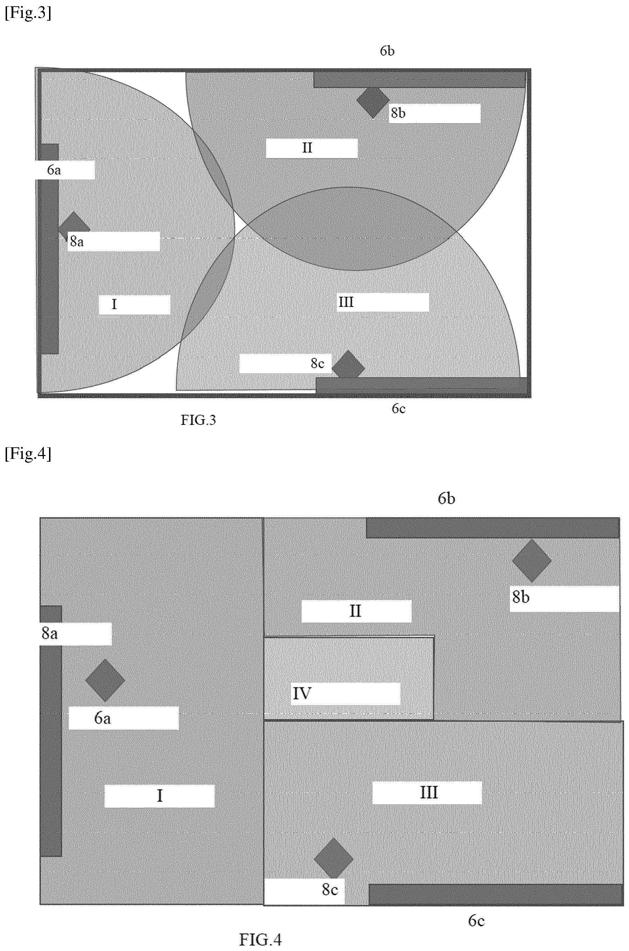

Fig.3 illustre les zones de couvertures I, II, III en 2D de différentes antennes 8a, 8b, 8c, liées aux distances de détection des antennes. Lorsque le badge se trouve dans une zone de couverture I, II, III d'une antenne 8a, 8b, 8c, le badge est détecté par l'antenne 8a, 8b, 8c correspondante et la distance entre l'antenne 8a, 8b, 8c et le badge est calculée, par exemple en continu, ou périodiquement. Lorsque la distance entre le badge et une antenne est inférieure à une distance de déclenchent prédéfinie, le module d'éclairage 6a, 6b, 6c associé à l'antenne 8a, 8b, 8c passe d'un premier mode d'éclairage à un deuxième mode d'éclairage. Le premier mode d'éclairage correspond par exemple à un état non actif du module et le deuxième mode correspond par exemple à un état actif du module.

Fig.4 illustre un espace réparti en quatre zones 2D prédéfinies I, II, III, IV. Les modules 6a, 6b et 6c peuvent être associés à un système de commande commun qui calcule la position du badge dans l'espace à partir des distances entre le badge et au moins deux antennes de détection 8a, 8b, 8c pour déterminer dans quelle zone se situe le badge et qui donne l'ordre d'activer ou non chacun des modules 6a, 6b et 6c en fonction de son positionnement relativement auxdites zones. Par exemple, le système de commande est configuré pour mettre en service le module d'éclairage 6a lorsque le badge est dans la zone I, le module éclairage 6b lorsque le badge est dans la zone II, le module éclairage 6c lorsque le badge est dans la zone III et les modules d'éclairage 6a, 6b et 6c lorsque le badge est dans la zone IV.

L'invention n'est pas limitée au mode de réalisation illustré.

Par exemple, le système de contrôle d'éclairage peut être installé dans un entrepôt ou un bâtiment.

La mesure de la distance entre le badge et l'antenne de détection peut s'effectuer autrement que par une mesure du temps de vol, par exemple par une mesure de l'intensité d'un signal (Received Signal Strength), par une technique de différence de temps d'arrivée (TDoA) ou par calcul à partir d'une technique reposant sur une triangulation. Il est toutefois préférable que la distance entre une antenne et un badge donné soit déterminée à partir du temps de vol entre cette antenne et ce badge, plutôt qu'en faisant intervenir au moins une autre antenne.

## Revendications

1. Procédé de gestion dynamique du fonctionnement, dans un espace, d'au moins un équipement (6 ; 6a, 6b, 6c) agencé pour fonctionner sélectivement au moins selon un premier mode de fonctionnement et un deuxième mode de fonctionnement, l'espace étant équipé d'au moins un système de détection (18) de badge RFID actif (10), chaque système de détection (18) de badge RFID actif (10) comportant une antenne de détection (8 ; 8a, 8b, 8c) et étant configuré pour identifier le badge (10) et délivrer une information relative à la distance (d) séparant le badge (10) de l'antenne de détection (8), procédé dans lequel on commande le passage du premier mode de fonctionnement au deuxième mode de fonctionnement de l'équipement (6 ; 6a, 6b, 6c), en fonction de l'identifiant de badge (10) et
- de la distance entre l'antenne de détection (8 ; 8a, 8b, 8c) et le badge (10), chaque équipement étant associé à au moins un système de détection et on commande le passage du premier mode de fonctionnement au deuxième mode de fonctionnement de l'équipement (6, 6a, 6b, 6c) lorsque la distance entre le badge (10) et l'antenne (8 ; 8a, 8b, 8c) du système de détection associé à l'équipement (6, 6a, 6b, 6c) devient inférieure à une distance de déclenchement prédéfinie, ou
- de la position 2D du badge (10) dans l'espace, au moins deux systèmes de détection étant présents, la position 2D du badge étant calculée par triangulation connaissant la distance du badge aux antennes (8a, 8b, 8c) de ces systèmes de détection, et on commande le passage du premier mode de fonctionnement au deuxième mode de fonctionnement de l'équipement (6a, 6b, 6c) lorsque le badge se situe dans une zone 2D (I, II, III, IV) prédéfinie de l'espace.

2. Procédé selon l'une quelconque des revendications précédentes, le système de détection (18) étant agencé pour délivrer l'information relative à la distance (d) entre l'antenne (8) et le badge (10) via la mesure du temps de vol, entre l'antenne (8) et le badge (10), d'un signal envoyé par le badge (10).

3. Procédé selon l'une quelconque des revendications précédentes, le système de détection (18) comportant une sortie locale, notamment un contact sec, et la commande du mode de fonctionnement de l'équipement s'effectuant à partir de ce contact sec.

4. Procédé selon l'une quelconque des revendications précédentes, l'espace étant un ouvrage, notamment un tunnel ou un entrepôt, par exemple fermé ou au moins partiellement ouvert.

5. Procédé selon l'une quelconque des revendications précédentes, l'espace étant équipé d'une pluralité de systèmes de détection (18) associés chacun à au moins un équipement respectif (6), de préférence, l'espace étant un ouvrage et les systèmes de détection (18) étant répartis le long de l'ouvrage, de même que les équipements respectifs.

6. Procédé selon l'une quelconque des revendications précédentes, la distance prédéfinie de déclenchement étant supérieure à 50m, notamment étant comprise entre 50 et 200m, le badge actif étant de préférence de technologie UWB.

7. Procédé selon l'une quelconque des revendications précédentes, l'équipement étant un module d'éclairage (6), un système de ventilation, de chauffage, de climatisation, d'alarme ou de surveillance.

8. Procédé selon l'une quelconque des revendications 1 à 7, pour la gestion dynamique de l'éclairage dans un espace, notamment le long d'un ouvrage tel qu'un tunnel (3), l'équipement étant un module d'éclairage (6), le premier mode de fonctionnement correspondant à un premier mode d'éclairage du module (6) et le deuxième mode de fonctionnement correspondant à un deuxième mode d'éclairage du module (6), le module étant agencé pour être sélectivement alimenté au moins selon le premier mode d'éclairage et le deuxième mode d'éclairage, de préférence, l'intensité lumineuse émise par ledit module (6) dans le deuxième mode d'éclairage est supérieure à l'intensité lumineuse émise par ledit module (6) dans le premier mode d'éclairage, et dans lequel on commande, en fonction de l'identifiant du badge, le passage du premier mode d'éclairage au deuxième mode d'éclairage du module (6) au moins lorsque la distance (d) entre le badge (10) et l'antenne du système de détection associé à ce module (6) devient inférieure à une distance de déclenchement prédéfinie, l'intensité lumineuse étant notamment non nulle dans chacun des deux modes d'éclairage.

9. Système de commande d'au moins d'un équipement dans un espace agencé pour fonctionner sélectivement au moins selon un premier mode de fonctionnement et un deuxième mode de fonctionnement, notamment pour la mise en œuvre du procédé selon l'une quelconque des revendications précédentes, comportant :
- au moins un système de détection de badge RFID actif comportant une antenne de détection et configuré pour identifier le badge et délivrer une information relative à la distance séparant le badge de l'antenne de détection,
- un système d'alimentation de l'équipement, agencé pour alimenter ce dernier sélectivement pour lui permettre de fonctionner selon au moins le premier mode de fonctionnement et le deuxième mode de fonctionnement, le système d'alimentation étant agencé pour commander le passage de l'équipement du premier mode de fonctionnement au deuxième mode de fonctionnement en fonction de l'identifiant de badge et
a) de la distance entre l'antenne de détection et le badge, chaque équipement étant associé à au moins un système de détection et le système commandant le passage du premier mode de fonctionnement au deuxième mode de fonctionnement de l'équipement lorsque la distance entre le badge et l'antenne du système de détection associé à l'équipement devient inférieure à une distance de déclenchement prédéfinie, ou
b) de la position 2D du badge dans l'espace, au moins deux systèmes de détection étant présents, la position 2D du badge étant calculée par triangulation connaissant la distance du badge aux antennes de ces systèmes de détection, le système commandant le passage du premier mode de fonctionnement au deuxième mode de fonctionnement de l'équipement lorsque le badge se situe dans une zone 2D prédéfinie de l'espace.

10. Système de commande selon la revendication précédente, l'équipement comportant un module d'éclairage (6) d'un ouvrage, le premier mode de fonctionnement correspondant à un premier mode d'éclairage du module (6) et le deuxième mode de fonctionnement correspondant à un deuxième mode d'éclairage du module (6), le système d'alimentation (9) étant agencé pour alimenter le module (6) sélectivement selon au moins le premier mode d'éclairage et le deuxième mode d'éclairage, l'intensité lumineuse émise par le module étant supérieure dans le deuxième mode d'éclairage, le système d'alimentation (9) étant agencé pour commander, en fonction de l'identifiant du badge, le passage du premier mode d'éclairage au deuxième mode d'éclairage au moins lorsque la distance (d) entre l'antenne (8) et le badge (10) tel qu'identifié par le système de détection devient inférieure à une distance de déclenchement prédéfinie.

11. Système d'éclairage comportant :
- au moins un système de commande selon la revendication précédente, et
- au moins un module d'éclairage (6) agencé pour être sélectivement alimenté au moins selon le premier mode d'éclairage et le deuxième mode d'éclairage.

12. Système selon la revendication précédente, comportant au moins deux modules d'éclairage (6) associés à un système de commande commun.

13. Ouvrage équipé d'un système d'éclairage selon l'une des revendications 11 et 12.

14. Ouvrage selon la revendication 13, comportant plusieurs modules d'éclairage (6) associés chacun à un système de détection (18) et un système d'alimentation (9).

15. Ouvrage selon l'une des revendications 13 et 14, les systèmes de détection (18) étant éloignés entre eux d'une distance (L) comprise entre 50 et 250m, notamment étant disposés tous les 100m ou 200m.
